# EUROPEAN PATENT APPLICATION

(11) **EP 2 490 066 A1**
(43) Date of publication of application: **22.08.2012**
(21) Application number: 10823221.6
(22) Date of filing: 02.06.2010
(51) Int. Cl.: G02F 1/1335, G02B 5/20, G02F 1/1343

(54) **LIQUID CRYSTAL DISPLAY PANEL, PROCESS FOR PRODUCTION OF SAME, AND LIQUID CRYSTAL DISPLAY DEVICE**

(30) Priority: 15.10.2009 JP 2009238638
(71) Applicant: Sharp Kabushiki Kaisha, Osaka-shi, Osaka 545-8522 (JP)
(72) Inventor: NAKAZAWA, Makoto, Osaka-shi Osaka 545-8522 (JP)
(74) Representative: Müller - Hoffmann & Partner
(86) International application number: PCT/JP2010/059381
(87) International publication number: WO 2011/045953

(57) **Abstract**

A liquid crystal display panel is disclosed in which, in a boundary region between a reflective region and a transmissive region, top and side surfaces of an end of a reflective electrode layer (19) which extends into the boundary region are not covered with a colored layer (20) and an insulating layer (21) in the reflective region and the colored layer (20) in the transmissive region. Therefore, a transflective liquid crystal display panel with a COA structure can be attained, which has improved color reproducibility and reflection characteristic in the reflective region.

## Description

### Technical Field

The present invention relates to liquid crystal display panels, in particular, to a transflective liquid crystal display panel with a COA (Color Filter On Array) structure in which a color filter layer is provided on an array substrate (active matrix substrate), and to a liquid crystal display device comprising the liquid crystal display panel.

### Background Art

Recently, liquid crystal display devices are widely used in various fields such as televisions, monitors and mobile phones, taking advantage of their characteristics such as energy saving, thin-typed, lightweight and the like.

Such liquid crystal display devices are classified into transmissive, reflective and transflective liquid crystal display devices, depending on the light source to be used to display.

A transmissive liquid crystal display device has a configuration such that a liquid crystal display panel installed in a liquid crystal display device is irradiated with light from a backlight installed separately, thereby displaying. Hence, the transmissive liquid crystal display device can display a bright and high-contrast image, but unfortunately has high power consumption.

On the other hand, the reflective liquid crystal display device is configured to display with the use of surrounding light reflected by a reflective electrode provided on the liquid crystal display panel, instead of light from a backlight. Although the reflective liquid crystal display device can suppress power consumption due to the disuse of a backlight, the reflective liquid crystal display device has a problem that the contrast would be degraded, depending on the brightness in the surrounding of a place where the device is used.

In order to solve such problems of the transmissive and reflective liquid crystal display devices, a transflective liquid crystal display device has been developed, which comprises within one pixel of a liquid crystal display panel a transmissive display region where display is performed with light from a backlight and a reflective display region where display is performed with surrounding light reflected by a reflective electrode.

Since the transflective liquid crystal display device includes the transmissive display region where display is performed with light from a backlight when the surrounding is dark, a certain degree of high-contrast can be retained irrespective of the surrounding brightness.

The transflective liquid crystal display device further includes the reflective display region where display is performed with surrounding light reflected by a reflective electrode and no light from a backlight is used, so that lowering of power consumption can be achieved due to the disuse of a backlight.

The transflective liquid crystal display device having such features is used both inside and outside, and widely in portable electronics devices such as mobile phones and PDA (Personal Digital Assistant), which have a limited power supply.

Recently, a liquid crystal display device having a high image quality is more and more required and a liquid crystal display panel installed in the liquid crystal display device tends to have higher resolution year after year.

Higher resolution of a liquid crystal display panel leads to downsizing of respective pixels in a color filter substrate on which a color filter layer is formed and in an array substrate disposed opposite to the color filter substrate. Accordingly, when the color filter substrate and the array substrate are assembled, the high-precision alignment adjustment is required.

Further, in some high-resolution liquid crystal display panels, it is difficult to assemble a color filter substrate and an array substrate by a conventional method in which precision of alignment adjustment is limited.

In the recent years, therefore, a COA (Color Filter On Array) structure in which a color filter layer is provided on an array substrate is increasingly adopted.

In a liquid crystal display panel in which the COA structure is adopted, no such high-precision alignment adjustment is required because a color filter layer is provided on an array substrate.

This is why a transflective liquid crystal display device with a COA structure receives attention.

For example, Patent Literature 1 describes a transflective liquid crystal display device with a COA structure.

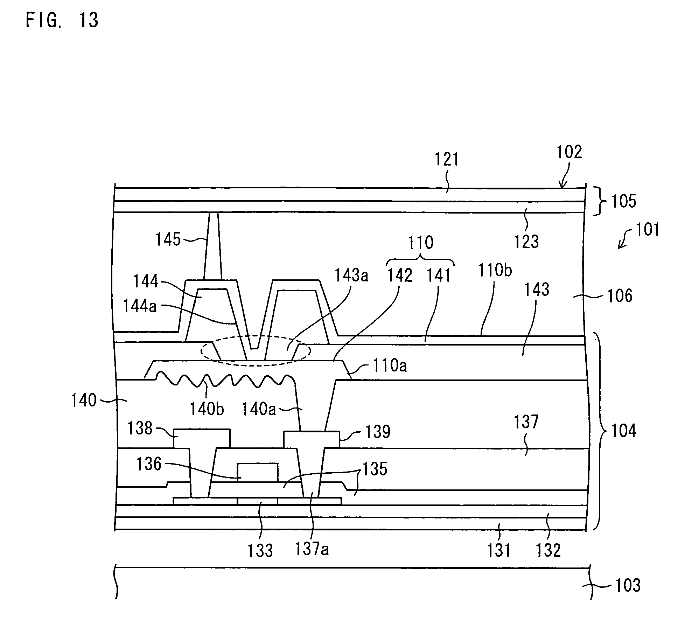

Fig. 13 illustrates a schematic configuration of a conventional transflective liquid crystal display device with a COA structure.

As illustrated in Fig. 13, a transflective liquid crystal display device 101 with a COA structure includes a liquid crystal display panel 102 and a backlight 103 disposed on the backside of the liquid crystal display panel 102.

The liquid crystal display panel 102 comprises an array substrate 104, a counter substrate 105, and a liquid crystal layer 106 enclosed between both substrates 104 and 105.

On a glass substrate 131, which is a lowermost layer of the array substrate 104, a base coat film 132 is formed. A semiconductor film 133 is formed on the base coat film 132, and a gate insulator 135 is formed on the semiconductor film 133.

Further, a gate electrode 136 is formed on the gate insulator 135, and an interlayer insulator 137 is formed on the gate electrode 136. A source electrode 138 and a drain electrode 139 are formed, both of which are conductive to both edge regions of the semiconductor film 133 via contact holes 137a provided in the gate insulator 135 and the interlayer insulator 137.

A transparent resin layer 140 is formed on the interlayer insulator 137, and a reflective electrode 142 is formed on a predetermined part of the transparent resin layer 140. The transparent resin layer 140 being in contact with an undersurface of the reflective electrode 142 includes fine projections and depressions 140b capable of scattering light in a predetermined angular range thereby effectively utilizing surrounding light.

The reflective electrode 142 is made from a conductive material which reflects light, such as aluminum, and is conductive to the drain electrode 139 via the contact hole 140a formed in the transparent resin layer 140.

Further, on the reflective electrode 142, a color filter layer 143 is formed, which is made from a colored photosensitive resin and colors light. An opening 143a (a region with a dotted line in Fig. 13) is provided in the color filter layer 143 and directly above the reflective electrode 142.

Multi gap sections 144 made from a transparent resin are further provided above the reflective electrode 142 so as to cover the reflective electrode 142 and the color filter layer 143. That is, the multi gap sections 144 are formed so as to cover parts of the color filter layer 143 provided above the reflective electrode 142 and to fill a part of the opening 143a.

Further, a transparent electrode 141 made from ITO (Indium Tin Oxide) or IZO (Indium Zinc Oxide) is formed so as to cover the color filter layer 143 and the multi gap section 144.

The transparent electrode 141 and the reflective electrode 142 are conductive to each other via a contact hole 144a formed in the multi gap sections 144.

The contact hole 144a is formed inside the peripheral border of the opening 143a of the color filter layer 143, and side walls of the contact hole 144a are formed by the multi gap sections 144.

The array substrate 104 includes a plurality of pixel electrodes 110 arranged in a matrix, each of the pixel electrodes 110 being formed from a transparent electrode 141 and a reflective electrode 142. The pixel electrode 110 includes a reflective section 110a formed by the reflective electrode 142, and a transmittive section 110b formed by that portion of the transparent electrode 141, which does not overlap with the reflective section 110a.

The above-mentioned multi gap sections 144 are configured to reduce the thickness of the liquid crystal layer 106 above the reflective section 110a to approximately half of the thickness of the liquid crystal layer 106 above the transmittive section 110b. Accordingly, the lengths of paths of light passing through the liquid crystal layer 106 in the reflective section 110a and in the transmittive section 110b are substantially equal. This allows reducing optical loss.

A photo spacer 145 for keeping the thickness of the liquid crystal layer 106 constant is further formed on the multi gap section 144.

In contrast, the counter substrate 105 comprises a glass substrate 121 and a counter electrode 123 formed on the glass substrate 121, the counter electrode 123 being made from ITO, IZO or the like.

Patent Literature 1 teaches that the liquid crystal display device has a COA structure in which the color filter layer 143 is provided on the array substrate 104 and thus does not require high-precision alignment adjustment, allowing a high-resolution liquid crystal display device to be achieved.

The Patent Literature 1 further teaches that, according to the configuration, the contact hole 144a is formed in the opening 143a, in other words, the contact hole 144a for electrically connecting the transparent electrode 141 and the reflective electrode 142 is formed in the opening 143a where no color filter layer 143 exists, which does not reduce the colored area (the area of the color filter layer 143) of the high-resolution liquid crystal display device and thus allows to prevent chroma of the display device from lowering.

### Citation List

### Patent Literature 1

Japanese Patent Application Publication No. Tokukai 2006-030951 A (Publication Date: February 2, 2006)┘

### Summary of Invention

### Technical Problem

However, in the configuration of Patent Literature 1, the large opening 143a formed by patterning, as indicated with a dotted line in Fig. 13, is provided in the color filter layer 143 above the reflective electrode 142.

The opening 143a thus does not include the color filter layer 143, so that light passing through the opening 143a cannot be colored.

Patent Literature 1 has a configuration such that surrounding light reflected by the reflective electrode 142 includes a large quantity of non-colored light, since the area of the opening 143a is relatively large with respect to that of the reflective electrode 142. This brings about a problem in color reproducibility in the reflective section 110a.

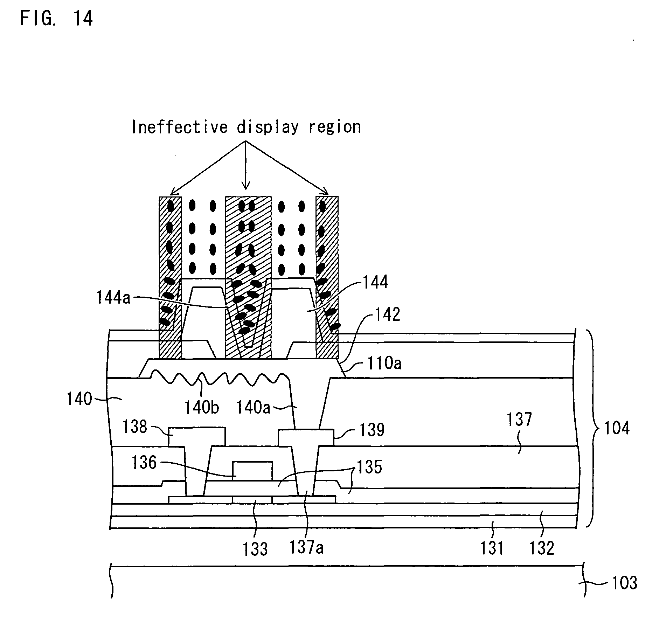

Fig. 14 illustrates regions in the liquid crystal display device illustrated in Fig. 13, where liquid crystal alignment is disordered.

In the configuration of Patent Literature 1 as illustrated in Fig. 14, liquid crystal alignment is disordered in the periphery of the multi gap sections 144 and in a region where the contact hole 144a is formed, namely, in those regions of the multi gap sections 144, which have inclination. The regions result in ineffective display regions of the reflective section 110a, which do not act as display regions.

The configuration of Patent Literature 1, in which the area of regions of the multi gap sections 144 with inclination is relatively large with respect to that of the reflective electrode 142, has thus a disadvantage in that reflection characteristic of the reflective section 110a is significantly deteriorated.

The present invention has been achieved in view of the above-mentioned problems and one object of the present invention is to provide a transflective liquid crystal display panel, a process for production of same, and a liquid crystal display device including the liquid crystal display panel, the liquid crystal display panel having a COA structure of improved color reproducibility and reflection characteristic in a reflective region.

### Solution to Problem

In order to attain the above mentioned object, a liquid crystal display panel according to the present invention is a liquid crystal display panel including: a first insulating substrate having (i) a reflective region including a reflective electrode layer for reflecting light, a colored layer for coloring light, an insulating layer and a pixel electrode layer, and (ii) a transmissive region including the colored layer and the pixel electrode layer; a second insulating substrate provided opposite to a surface of the first insulating substrate, on which surface the pixel electrode layer is formed; and a liquid crystal layer enclosed between the first insulating substrate and the second insulating substrate, wherein: the insulating layer is provided to vary the thickness of the liquid crystal layer in the reflective region from that in the transmissive region, and in the reflective region, any one of the colored layer and the insulating layer covers the reflective electrode layer, the other of the colored layer and the insulating layer covers the any one of the colored layer and the insulating layer, and the pixel electrode layer covers the other of the colored layer and the insulating layer, in the transmissive region, the colored layer and the pixel electrode layer are provided in such a way that the pixel electrode layer covers the colored layer, and in a boundary region between the reflective region and the transmissive region, top and side surfaces of an end of the reflective electrode layer which extends into the boundary region are not covered with the colored layer and the insulating layer in the reflective region and with the colored layer in the transmissive region.

In order to attain the above-mentioned object, a method for producing a liquid crystal display panel according to the present invention is a method for producing a liquid crystal display panel, the liquid crystal display panel including: a first insulating substrate having (i) a reflective region including a reflective electrode layer for reflecting light, a colored layer for coloring light, an insulating layer and a pixel electrode layer, and (ii) a transmissive region including the colored layer and the pixel electrode layer; a second insulating substrate provided opposite to a surface of the first insulating substrate, on which surface the pixel electrode layer is formed; and a liquid crystal layer enclosed between the first insulating substrate and the second insulating substrate, the method comprising the steps of: (a) forming the reflective electrode layer in the reflective region; (b) forming the colored layer in the reflective region and the transmissive region; (c) forming the insulating layer in the reflective region to vary the thickness of the liquid crystal layer in the reflective region from that in the transmissive region; and (d) forming the pixel electrode layer in the reflective region and the transmissive region, the step (b) of forming the colored layer, the step (c) of forming the insulating layer, and the step (d) of forming the pixel electrode layer being performed so that, in the reflective region, any one of the colored layer and the insulating layer covers the reflective electrode layer, the other of the colored layer and the insulating layer covers the any one of the colored layer and the insulating layer, and the pixel electrode covers the other of the colored layer and the insulating layer, and in the transmissive region, the colored layer and the pixel electrode layer are provided in such a way that the pixel electrode layer covers the colored layer, and in a boundary region between the reflective region and the transmissive region, top and side surfaces of an end of the reflective electrode layer which extends into the boundary region are not covered with the colored layer and the insulating layer in the reflective region and with the colored layer in the transmissive region.

In the conventional configuration, an opening in the color filter layer (colored layer) is provided above the reflective electrode.

Light passing through the opening is not colored. Accordingly, in a case where the area of the opening is relatively large with respect to that of the reflective electrode, surrounding light reflected by the reflective electrode would include a large quantity of non-colored light. This brings about disadvantage in color reproducibility.

That is, in the conventional configuration, the whole openings in the color filter layer are regarded as regions which do not color the surrounding light reflected by the reflective electrode.

In contrast, according to the configuration of the present invention, in the boundary region between the reflective region and the transmissive region, top and side surfaces of an end of the reflective electrode layer which extends into the boundary region are not covered with the colored layer in the reflective region and with the colored layer in the transmissive region.

That is, an opening formed by the colored layer in the reflective region and by the colored layer in the transmissive region is partially present on the reflective electrode layer.

Such a configuration can reduce quantity of non-colored light in the surrounding light reflected by the reflective electrode. Therefore, even in a case in which the opening formed by the colored layer in the reflective region and by the colored layer in the transmissive region has a size equivalent to that in the conventional configuration, it is possible to attain a liquid crystal display panel with improved color reproducibility in the reflective region, and a method for producing the liquid crystal display panel.

In the conventional configuration, the periphery of the multi gap sections (insulating layer) and the contact hole are disposed above the reflective electrode. That is, a plurality of the multi gap sections with inclination is provided above the reflective electrode.

In such multi gap sections with inclination, liquid crystal alignment is disordered. Such regions would represent ineffective display regions, which do not act as display regions.

The conventional configuration has a disadvantage in that reflection characteristic in the reflective region is significantly deteriorated since the area of those regions of the multi gap sections with inclinations is relatively large with respect to the area of the reflective electrode.

In contrast, according to the configuration of the present invention, in the boundary region between the reflective region and the transmissive region, top and side surfaces of an end of the reflective electrode layer which extends into the boundary region are not covered with the insulating layer provided to vary the thickness of the liquid crystal layer in the reflective region from that in the transmissive region.

Hence, according to the configuration, it is possible to reduce the number of inclinations of the insulating layer provided above the reflective electrode. This allows attaining a liquid crystal display panel with an improved reflection characteristic in the reflective region.

Further, in a high-resolution liquid crystal display panel having the reduced area of the reflective electrode in accordance with the above-described configuration, color reproducibility and reflection characteristic in the reflective region can further be improved.

In order to attain the above-mentioned object, a liquid crystal display device according to the present invention is a liquid crystal display device including: the liquid crystal display panel; and a backlight for irradiating the liquid crystal display panel with light.

According to the configuration, a liquid crystal display device having improved color reproducibility and reflection characteristic in the reflective region can be attained.

### Advantageous Effects of Invention

As described above, a liquid crystal display panel according to the present invention is configured in such a manner that: the insulating layer is provided to vary the thickness of the liquid crystal layer in the reflective region from that in the transmissive region, and in the reflective region, any one of the colored layer and the insulating layer covers the reflective electrode layer, the other of the colored layer and the insulating layer covers the any one of the colored layer and the insulating layer, and the pixel electrode layer covers the other of the colored layer and the insulating layer, in the transmissive region, the colored layer and the pixel electrode layer are provided in such a way that the pixel electrode layer covers the colored layer, and in a boundary region between the reflective region and the transmissive region, top and side surfaces of an end of the reflective electrode layer which extends into the boundary region are not covered with the colored layer and the insulating layer in the reflective region and with the colored layer in the transmissive region.

As described above, the liquid crystal display device according to the present invention is configured to include the liquid crystal display panel and a backlight for irradiating the liquid crystal display panel with light.

As described above, a method for producing a liquid crystal display panel according to the present invention is configured to include the steps of: (a) forming the reflective electrode layer in the reflective region; (b) forming the colored layer in the reflective region and the transmissive region; (c) forming the insulating layer in the reflective region to vary the thickness of the liquid crystal layer in the reflective region from that in the transmissive region; and (d) forming the pixel electrode layer in the reflective region and the transmissive region, the step (b) of forming the colored layer, the step (c) of forming the insulating layer, and the step (d) of forming the pixel electrode layer being performed so that, in the reflective region, any one of the colored layer and the insulating layer covers the reflective electrode layer, the other of the colored layer and the insulating layer covers the any one of the colored layer and the insulating layer, and the pixel electrode covers the other of the colored layer and the insulating layer, and in the transmissive region, the colored layer and the pixel electrode layer are provided in such a way that the pixel electrode layer covers the colored layer, and in a boundary region between the reflective region and the transmissive region, top and side surfaces of an end of the reflective electrode layer which extends into the boundary region are uncovered with the colored layer and the insulating layer in the reflective region and with the colored layer in the transmissive region.

Hence, it is possible to attain a transflective liquid crystal display panel, a process for production of same, and a liquid crystal display device including the liquid crystal display panel, the liquid crystal display panel having a COA structure of improved color reproducibility and reflection characteristic in the reflective region.

### Brief Description of Drawings

Fig. 1

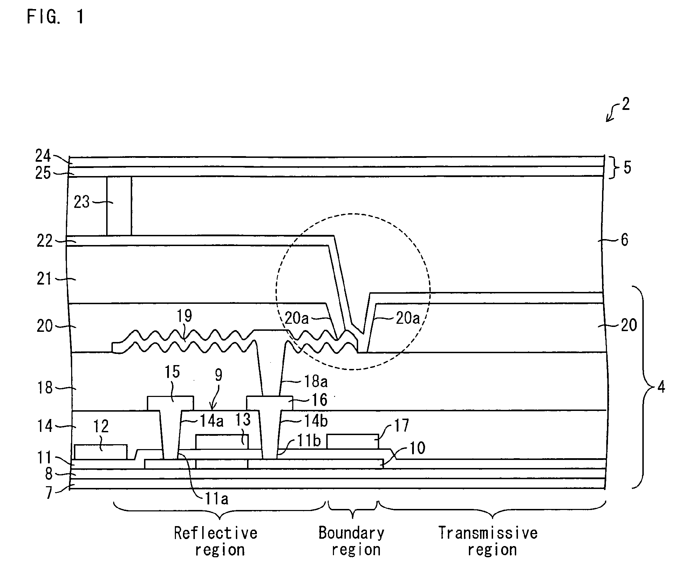

   Fig. 1 illustrates a schematic configuration of a liquid crystal display panel installed in a liquid crystal display device according to an embodiment of the present invention.
Fig. 2

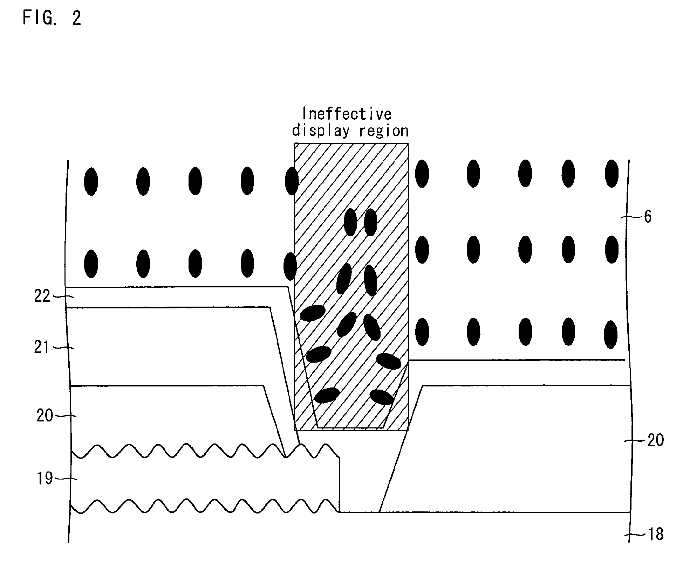

   Fig. 2 is a partial enlarged view of a section with a dashed line in the liquid crystal display panel illustrated in Fig. 1.
Fig. 3

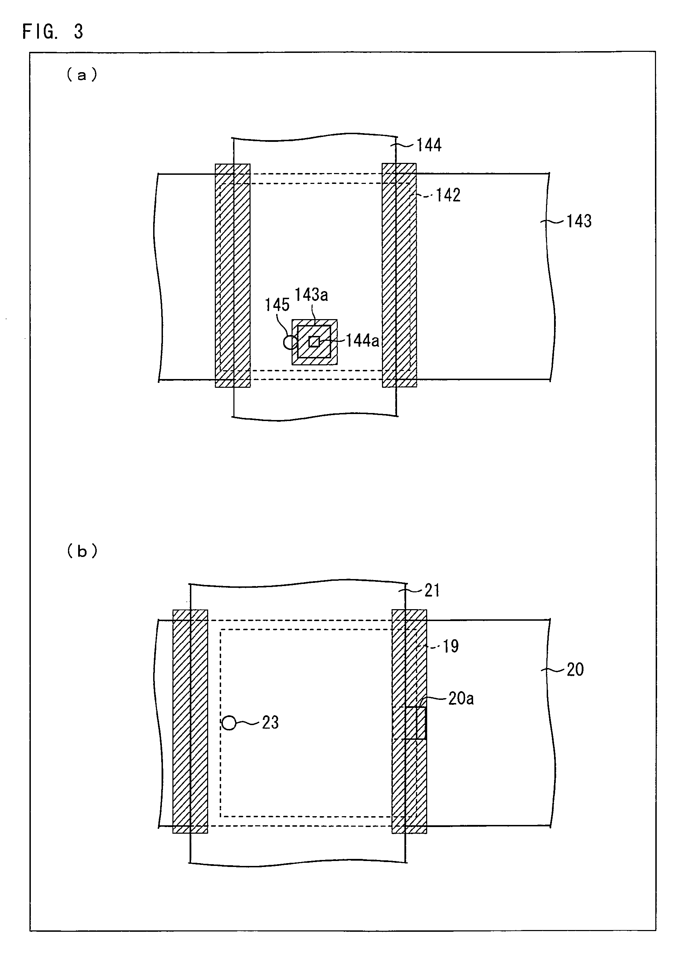

   Fig. 3 illustrates liquid crystal display panels in plan views, for determining effective reflectance ratios. (a) of Fig. 3 illustrates a conventional liquid crystal display panel of Fig. 13, and (b) of Fig. 3 illustrates a liquid crystal display panel of Fig. 1.
Fig. 4

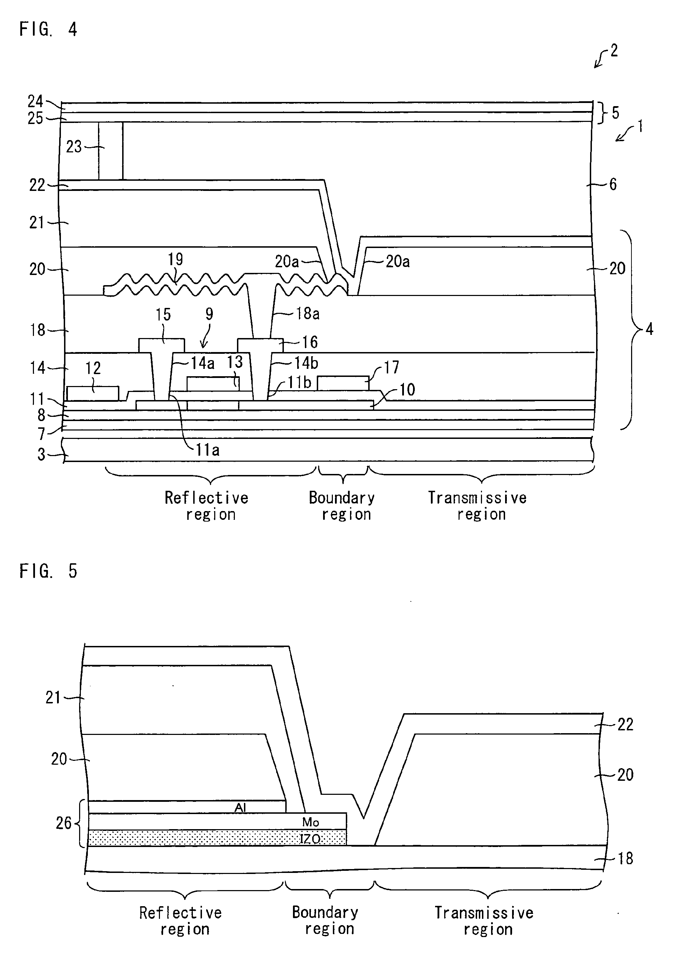

   Fig. 4 illustrates a schematic configuration of a liquid crystal display device according to an embodiment of the present invention.
Fig. 5
   Fig. 5 illustrates another embodiment of the liquid crystal display panel according to the present invention.
Fig. 6

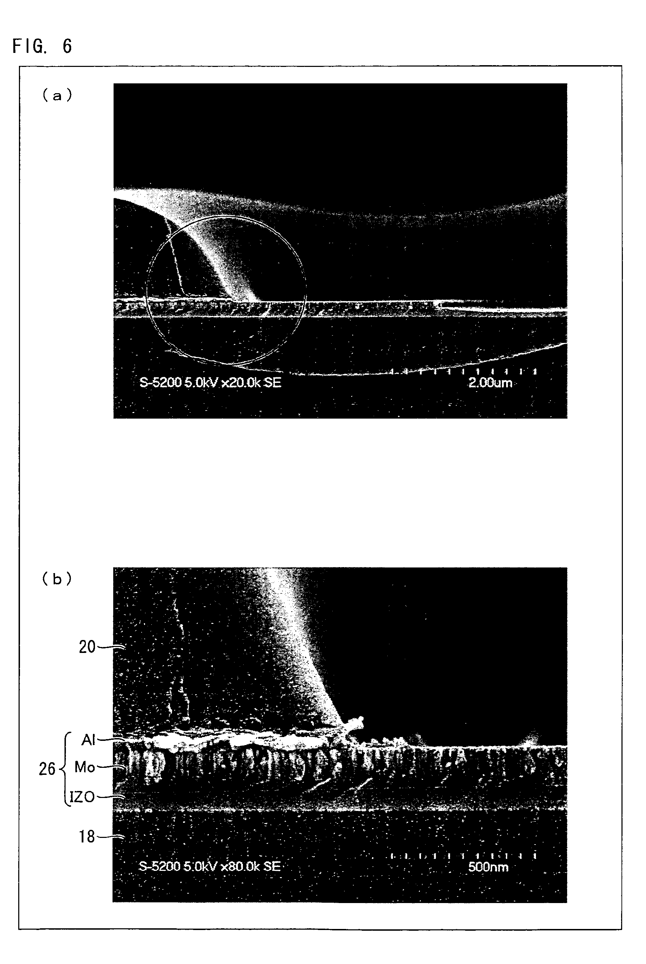

   Fig. 6 shows SEM photographs in which a reflective electrode layer and a colored layer are provided in the liquid crystal display panel of Fig. 5.
Fig. 7

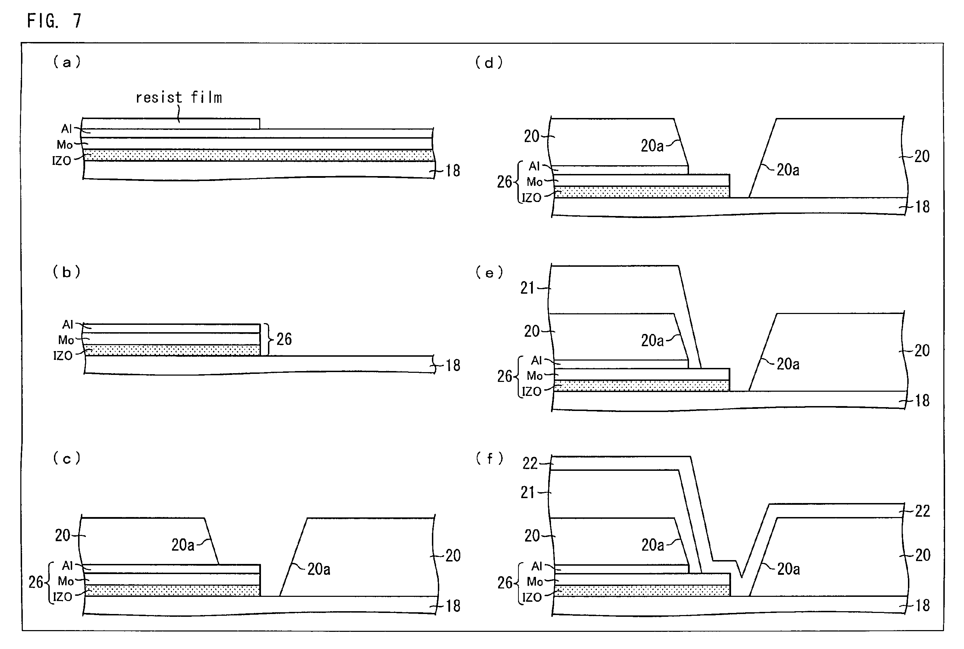

   Fig. 7 illustrates parts of a process for producing the liquid crystal display panel having a configuration illustrated in Fig. 5.
Fig. 8

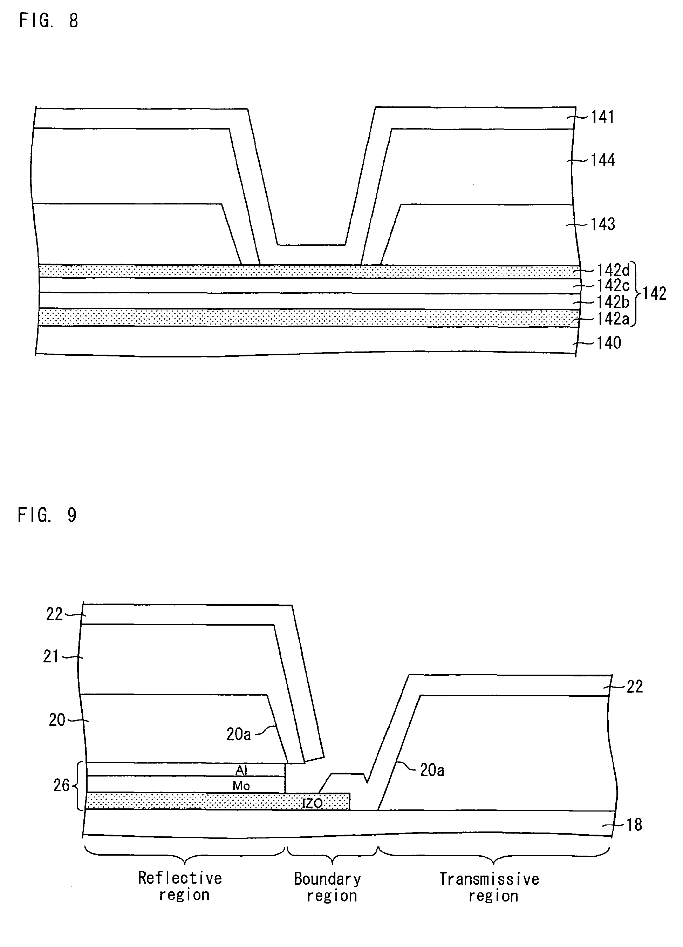

   Fig. 8 illustrates a contact section in the conventional liquid crystal display panel of Fig. 13, where a transparent electrode is electrically connected to a reflective electrode.
Fig. 9
   Fig. 9 illustrates yet another embodiment of the liquid crystal display panel according to the present invention.
Fig. 10

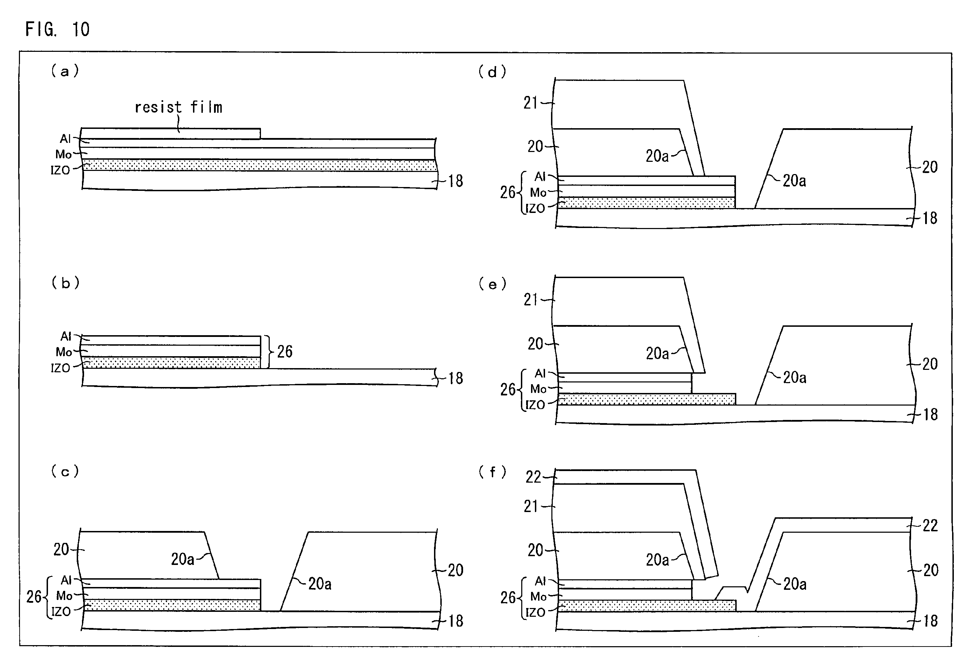

   Fig. 10 illustrates parts of a process for producing the liquid crystal display panel having the configuration illustrated in Fig. 9.
Fig. 11

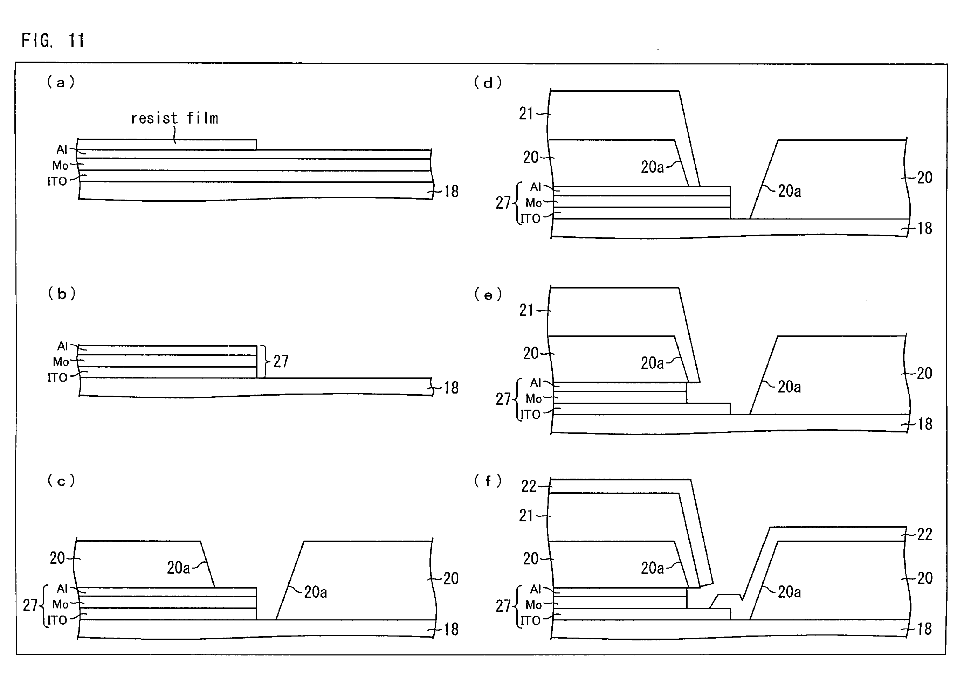

   Fig. 11 illustrates parts of a process for producing of a modification of the liquid crystal display panel according to the present invention.
Fig. 12

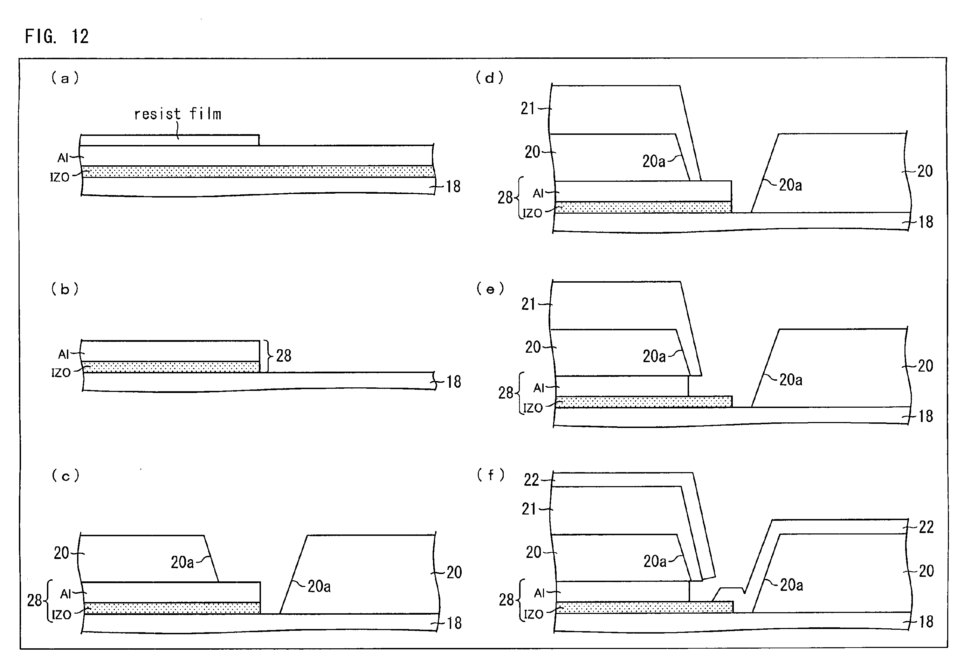

   Fig. 12 illustrates parts of a process for producing another modification of the liquid crystal display panel according to the present invention.
Fig. 13
   Fig. 13 illustrates a schematic configuration of a conventional transflective liquid crystal display device with a COA structure.
Fig. 14
   Fig. 14 illustrates regions in the liquid crystal display device illustrated in Fig. 13, where liquid crystal alignment is disordered.

### Description of Embodiments

Embodiments of the present invention are described in detail below with reference to the attached drawings. However, sizes, materials, shapes and relative locations of the components described in the embodiments are merely examples and it should not be interpreted that the scope of the invention is limited thereto.

### [Embodiment 1]

With reference to Fig. 4, a configuration of a liquid crystal display device according to the present invention will be described. The liquid crystal display device includes a TFT array substrate (first insulating substrate), a counter substrate (second insulating substrate), a liquid crystal layer and a backlight.

Fig. 4 illustrates a schematic configuration of the liquid crystal display device 1.

The liquid crystal display device 1 comprises the backlight 3 on the backside of a liquid crystal display panel 2, the backlight 3 irradiating the liquid crystal display panel 2 with light.

The liquid crystal display panel 2 includes the TFT array substrate 4, the counter substrate 5, and the liquid crystal layer 6 enclosed between the both substrates 4 and 5.

The TFT array substrate 4 includes a glass substrate 7, a base coat film 8 formed on the glass substrate 7, and a TFT elements 9 formed on the base coat film 8.

As illustrated in Fig. 4, the TFT element 9 has a laminated structure in which a semiconductor film 10 formed on the base coat film 8, a gate insulator 11 formed so as to cover the base coat film 8 and the semiconductor film 10, a gate bus line 12 and a gate electrode layer 13 both of which are formed on the gate insulator 11, and a protective film 14 formed so as to cover the gate insulator 11, the gate bus line 12 and the gate electrode layer 13, are laminated in this order.

Further, in the gate insulator 11 and the protective film 14, contact holes 11a and 14a for electrically connecting the semiconductor film 10 to a source electrode 15, and contact holes 11b and 14b for electrically connecting the semiconductor film 10 to a drain electrode 16 are formed.

In the present embodiment, the TFT element 9 is a top gate type element. Note, however, that the present embodiment is not limited thereto and may be a bottom gate type element.

The TFT array substrate 4 further includes a storage capacitor element including the semiconductor film 10, the gate insulator 11 and a storage capacitor wiring (a storage capacitor electrode) 17.

In the present embodiment, the liquid crystal display panel 2 including the storage capacitor element is used. Note, however, that the liquid crystal display panel 2 is not limited thereto and the storage capacitor element may arbitrarily be provided according to need.

In the TFT array substrate 4, an interlayer insulator 18 is provided so as to cover the protective film 14, the source electrode 15 and the drain electrode 16.

The interlayer insulator 18 has projections and depressions whose tops and bottoms are rounded, in a part of the top surface of the interlayer insulator 18.

On the projections and depressions of the interlayer insulator 18, whose tops and bottoms are rounded, a reflective electrode layer 19 having projections and depressions is formed, the reflective electrode layer 19 being made from a conductive material having optical reflectance such as Al and Ag.

In view of an aperture ratio or the like of the liquid crystal display panel 2, the present embodiment has a configuration such that a region where the reflective electrode layer 19 is formed overlaps with a region where the TFT element 9 is formed, when seen in a plan view. However, the configuration is not limited to such a configuration.

The present embodiment uses the reflective electrode layer 19 having a laminated structure of a plurality of conductive material layers in which a layer made from a conductive material having optical reflectance such as Al and Ag is an uppermost layer. However, the reflective electrode layer 19 is not limited to such a structure, and may be a single-layered reflective electrode layer made from a conductive material having optical reflectance, such as Al and Ag.

The present embodiment uses an organic film such as a photosensitive transparent acrylic resin as the interlayer insulator 18. In order to form the rounded projections and depressions on a part of the top surface of the interlayer insulator 18 (where the reflective electrode layer 19 is formed), the organic film is patterned by exposure and development processes and then melted flow by a thermal treatment process. In this way, the organic film having rounded projections and depressions is obtained.

On the part of the top surface having the rounded projections and depressions, of the interlayer insulator 18, the reflective electrode layer 19 having fine rounded projections and depressions is formed. Such configuration enables light to be scattered in a certain angular range. The scattering of light in a certain angular range allows utilizing surrounding light thereby obtaining bright reflection characteristic.

Further, the present embodiment has a configuration such that a pixel electrode 22, which will be described later, is electrically connected to the drain electrode 16 of the TFT element 9 via the reflective electrode layer 19, and thus the reflective electrode layer 19 is electrically connected to the drain electrode 16 of the TFT element 9 via the contact hole 18a formed in the interlayer insulator 18. However, the configuration of the reflective electrode layer 19 is not limited to such a configuration. In a case where the pixel electrode 22 and the drain electrode 16 of the TFT element 9 are not electrically connected to each other via the reflective electrode layer 19, the reflective electrode layer 19 may be floated (not electrically connected to both of the pixel electrode 22 and the drain electrode 16 of the TFT element 9).

The colored layer 20 is formed so as to cover the reflective electrode layer 19 in the reflective region and the interlayer insulator 18 in the transmissive region, of the TFT array substrate 4.

The colored layer 20 is made from a colored photosensitive resin, and constitutes a color filter layer for coloring light.

An insulating layer 21 for reducing the thickness of the liquid crystal layer 6 is further provided on the colored layer 20 in the reflective region of the TFT array substrate 4.

The insulating layer 21 enables the thickness of the liquid crystal layer 6 in the reflective region to be reduced to approximately half of that in the transmissive region. Accordingly, the lengths of paths of light passing through the liquid crystal layer 6 in the reflective region and in the transmissive region are substantially equal, so that optical loss can be reduced.

Although, in the present embodiment, the colored layer 20 is formed below the insulating layer 21 in the reflective region in the TFT array substrate 4, the location of the colored layer 20 is not limited thereto and the insulating layer 21 may be formed below the colored layer 20. Another layer may also be provided between the colored layer 20 and the insulating layer 21.

As the insulating layer 21, an organic film such as a photosensitive transparent acrylic resin can be used. Note, however, that the insulating layer 21 is not limited to the organic film.

Further, the pixel electrode 22 made from ITO or IZO, for example, is formed so as to cover the insulating layer 21 in the reflective region and the colored layer 20 in the transmissive region, of the TFT array substrate 4.

In the present embodiment, the pixel electrode 22 is made from IZO. This is because, if the pixel electrode 22 were made from ITO and the reflective electrode 19 had a laminated structure of a plurality of conductive material layers in which an Al layer is an uppermost layer, then electrical corrosion would be likely to occur in a location where the ITO layer makes contact with the Al layer.

As illustrated, a photo spacer 23 for keeping the thickness of the liquid crystal layer 6 constant is further provided in the reflective region of the TFT array substrate 4.

While, the counter substrate 5 comprises a glass substrate 24 and a counter electrode 25, the counter electrode 25 being made from ITO, IZO or the like and being formed on the glass substrate 24.

Alignment films (not illustrated) are formed on a surface of the TFT array substrate 4, on which surface the pixel electrode 22 is formed, and on a surface of the counter substrate 5, on which surface the counter electrode 25 is formed.

The liquid crystal display device 1 is a transflective liquid crystal display device with a COA structure in which the colored layer 20 is provided on the TFT array substrate 4, and thus does not require a high-precision alignment adjustment.

With reference to Figs. 1 to 3, a configuration of the liquid crystal display panel 2 installed in the liquid crystal display device 1 will be described in detail.

Fig. 1 illustrates a schematic configuration of the liquid crystal panel 2 installed in the liquid crystal display device 1.

As illustrated Fig. 1, in a boundary region between the reflective region and the transmissive region, top and side surfaces of an end of the reflective electrode layer 19 which extends into the boundary region are not covered with the colored layer 20 and the insulating layer 21 in the reflective region and with the colored layer 20 in the transmissive region.

That is, in the present embodiment, a hole 20a is formed in the colored layer 20 so as to uncover top and side surfaces of an end of the reflective electrode layer 19, and the insulating layer 21 is formed so as to cover a side surface of the colored layer 20 and to fill a part of the hole 20a. Note, however, that the present embodiment is not limiting to such a configuration. The only thing needed for the present embodiment is that top and side surfaces of an end of the reflective electrode layer 19 are not covered with the colored layer 20 and the insulating layer 21 in the reflective region, and the colored layer 20 in the transmissive region.

In a case where, in the boundary region, a portion of the pixel electrode 22 formed in the reflective region is electrically connected to another portion of the pixel electrode 22 formed in the transmissive region, as illustrated in Fig. 1, it is preferable that side surfaces of the hole 20a of the colored layer 20 and a side surface of the insulating layer 21 which is formed so as to cover one of the side surfaces of the hole 20a have a inclined forward tapered shape.

Although, in the present embodiment, the boundary region is formed above the storage capacitor wiring 17 which forms a part of the storage capacitor element, as illustrated in Fig. 1, the location where the boundary region is formed is not limited thereto.

Because the storage capacitor wiring 17 is generally made from a high conductive metal material, light cannot be transmissive through the storage capacitor wiring 17.

In the configuration, it is thus possible to attain the liquid crystal display panel 2 having an improved aperture ratio since the boundary region including a region where light passing through the region is not colored and an ineffective display region is formed above the storage capacitor wiring 17 through which no light is transmitted, so as to overlap with the storage capacitor wiring 17 which does not contribute the aperture ratio.

Fig. 2 is a partial enlarged view of a section with a dashed line in the liquid crystal display panel 2 illustrated in Fig. 1.

According to the configuration as illustrated in Fig. 2, in the boundary region between the reflective region and the transmissive region, top and side surfaces of an end of the reflective electrode layer 19 which extends into the boundary region are not covered with the colored layer 20 and the insulating layer 21 in the reflective region and the colored layer 20 in the transmissive region.

Hence, the number of the inclinations of the insulating layer 21 formed above the reflective electrode layer 19 in accordance with the configuration can be reduced relative to that of the conventional configuration as illustrated in Fig. 14 (in which the periphery of the multi gap sections 144 and the contact hole 144a are formed above the reflective electrode 142). It is thus possible to attain a liquid crystal display panel 2 having an improved reflection characteristic in the reflective region (having a reduced area of ineffective display regions in the reflective region).

Fig. 3 illustrates, in plan views, the liquid crystal display panel 102 of Fig. 13, and the liquid crystal display panel 2 of Fig. 1. The illustrations are used to determine effective reflectance ratios.

These effective reflectance ratios (the ratios of the reflective electrode area to the effective reflective area in the reflective electrode area) are determined, assuming that ineffective display regions in the right and left side edges of the reflective electrodes have respectively a width (a width in a lateral direction of the meshed regions of the Fig. 3) of 5 µm, and ineffective display region generated by the formation of the contact hole 144a has a size of 8 µm × 8 µm (a diameter of the contact hole is 4 µm and a width of every side of the ineffective display region generated on the periphery of the contact hole is 2 µm).

If both the reflective electrode layer 142 provided in the conventional liquid crystal display panel of (a) of Fig. 3 and the reflective electrode layer 19 provided in the liquid crystal display panel 2 of (b) of Fig. 3 have a size of 25 µm × 25 µm, the effective reflectance ratio of the configuration illustrated in (a) of Fig. 3 would be (25×25-(8×8+5×25×2))/(25×25), which substantially equals to 50%. On the other hand, the effective reflectance ratio of the configuration illustrated in (b) of Fig. 3 would be (25×25-(5×25×2))/(25×25), which substantially equals to 60%.

If both the reflective electrode layers 142 and 19 have a size of 30 µm × 30 µm, then the effective reflectance ratio of the configuration illustrated in (a) of Fig. 3 would be 30×30-(8×8+5×30×2))/(30×30), which substantially equals to 59%, while the effective reflectance ratio of the configuration illustrated in (b) of Fig. 3 would be (30×30-(5×30×2))/(30×30), which substantially equals to 66%, both effective reflectance ratios being obtained analogously with the case mentioned above.

Further, if both the reflective electrode layers 142 and 19 have a size of 40 µm × 40 µm, the effective reflectance ratio of the configuration illustrated in (a) of Fig. 3 would be 40×40-(8×8+5×40×2))/(40×40), which substantially equals to 71%, while the effective reflectance ratio of the configuration illustrated in (b) of Fig. 3 would be (40×40-(5×40×2))/(40×40), which substantially equals to 75%, both effective reflectance ratios being determined analogously with the case mentioned above.

As described above, the liquid crystal display panel 2 in accordance with the present embodiment has a higher effective reflectance ratio relative to that of the conventional liquid crystal display panel and thus an improved reflection characteristic in the reflective region.

The effective reflectance ratio of the liquid crystal display panel of the present invention is more and more improved as compared with that of the conventional configuration, as the liquid crystal display panels have higher resolution, that is to say, the areas of the reflective electrode layers 142 and 19 are more decreased.

That is, if both the reflective electrode layers 142 and 19 have a size of 40 µm × 40 µm, the effective reflectance ratio of the configuration according to the present invention is improved with respect to that of the conventional configuration by 4%. While, if both the reflective electrode layers 142 and 19 have a size of 25 µm × 25 µm, the effective reflectance ratio of the configuration according to the present invention is improved with respect to that of the conventional configuration by 10%.

Consequently, the configuration can advantageously be used to improve the reflection characteristic in the reflective region of the liquid crystal display panel with a high resolution and a small area of the reflective electrode layer.

With reference to Fig. 1, a method for producing the reflective electrode layer 19, the colored layer 20, the insulating layer 21, and the pixel electrode layer 22, in the liquid crystal display panel 2 will be described.

The method for producing the liquid crystal display panel 2 includes the steps of: forming the reflective electrode layer 19 in the reflective region; forming the colored layer 20 in the reflective region and the transmissive region; forming the insulating layer 21 in the reflective region; and forming the pixel electrode layer 22 in the reflective region and the transmissive region.

The step for forming the colored layer 20, the step for forming the insulating layer 21, and the step for forming the pixel electrode layer 22 are performed so that, in the reflective region, the colored layer 20 covers the reflective electrode layer 19, and the insulating layer 21 covers the colored layer 20, and the pixel electrode layer 22 covers the insulating layer 21, and in the transmissive region, the pixel electrode layer 22 and the colored layer 20 are provided in such a way that the pixel electrode layer 22 covers the colored layer 20, and in the boundary region between the reflective region and the transmissive region, top and side surfaces of an end of the reflective electrode layer 19 which extends into the boundary region are not covered with the colored layer 20 and the insulating layer 21 in the reflective region and the colored layer 20 in the transmissive region.

The same layers formed among the respective regions mentioned above are preferably produced in the same process, in view of reducing the number of the processes.

In the present embodiment, a gate electrode layer 13 can be made from, for example, Al alloy. Note, however, that the gate electrode layer 13 is not particularly limited to such a configuration and may be made from an element selected from the group consisting of Ta, W, Ti, Mo, Al, Cu, Cr, Nd, or an alloy material or a compound material made mainly of the selected element. The gate electrode layer 13 may also be a semiconductor film made particularly from polycrystalline silicon doped with impurities such as phosphorus or boron.

Further, the source electrode layer 15 and the drain electrode layer 16 can be made from Al alloy or Mo, or a film in which Al alloy and Mo are laminated. Note, however, that the source electrode layer 15 and the drain electrode layer 16 are not limited to such configurations and may be an element selected from the group consisting of Ta, W, Ti, Mo, Al, Cu, Cr, Nd, or an alloy material or a compound material made mainly of the selected element, and may be formed in a laminated structure, if needed.

Furthermore, in the present embodiment, an amorphous silicon film is used as the semiconductor film 10 provided in the TFT element 9. Note, however, that the semiconductor film 10 is not limited to such a configuration and may be made from amorphous germanium, amorphous silicon-germanium, or amorphous silicon-carbide.

The semiconductor film may also be made from polycrystalline silicon, polycrystalline germanium, polycrystalline silicon-germanium, or polycrystalline silicon-carbide.

In a case where the storage capacitor element including the semiconductor film 10, the gate insulator 11 and the storage capacitor wiring 17 is provided in the TFT array substrate 4, the semiconductor film 10 is preferably made from polycrystalline silicon or the like.

As the gate insulator 11, an inorganic film such as SiNx and SiOx can be used. Note, however, that the gate insulator 11 is not limited to such a configuration.

The protective film 14, the interlayer insulator 18, and the insulating layer 21 for reducing the thickness of the liquid crystal layer 6 can be made from inorganic films such as SiNx. Note, however, that the protective film 14, the interlayer insulator 18, and the insulating layer 21 are not limited such a configuration and may be formed of inorganic films such as SiOx and SiON. Organic films such as a photosensitive transparent acrylic resin, as well as the inorganic film, may be used. A laminated structure of an inorganic film and an organic film may also be used.

### [Embodiment 2]

Embodiment 2 of the present invention will be described with reference to Figs. 5 to 8. The present embodiment differs from Embodiment 1 in that a reflective electrode layer 26 has a laminated structure in which an aluminum layer (Al layer) is an uppermost layer and a molybdenum layer (Mo layer) and an IZO layer are provided below the Al layer, and that an insulating layer 21 is formed along a side surface of a colored layer 20 so as to cover a part of the top surface of the Mo layer of the reflective electrode layer 26, but otherwise Embodiment 2 is equivalent to Embodiment 1. For convenience, the same reference numerals are given to the members having the same functions as those of the members indicated in the figures illustrating Embodiment 1 and their descriptions are omitted.

Fig. 8 illustrates a contact section in the conventional liquid crystal display panel 102 of Fig. 13, where the transparent electrode 141 is electrically connected to the reflective electrode 142.

The transparent electrode 141 is made from ITO, and, in a case where an uppermost layer of the reflective electrode 142 is an Al layer, an IZO layer is provided on the Al layer to avoid an electrical corrosion which may be caused by the direct contact of the ITO layer with the Al layer in the contact section. In other words, the reflective electrode layer 142 illustrated in Fig. 8 has a laminated structure in which the IZO layer 142a, the Mo layer 142b, the Al layer 142c, and the IZO layer 142d are laminated in this order.

In a case in which the transparent electrode 141 is made from ITO, although the provision of the IZO layer 142d on the Al layer 142c can avoid the risk of electrical corrosion of the ITO layer and the Al layer, as described above, reflectance of the reflective electrode layer 142 would be reduced if the IZO layer 142d is provided on the Al layer 142c which is a reflective layer of the reflective electrode layer 142. It is because the IZO layer has light transmission of approximately 70 to 80% (light transmission of the ITO layer is approximately 90%).

Fig. 5 illustrates Embodiment 2 of the liquid crystal display panel 2 in accordance with the present invention.

Fig. 6 shows SEM photographs in which the reflective electrode layer 26 and the colored layer 20 are formed in the liquid crystal display panel 2 of Fig. 5.

As illustrated in Fig. 5, the reflective electrode layer 26 has a laminated structure in which the Al layer is an uppermost layer and the Mo layer and the IZO layer are provided below the Al layer, the Mo layer being in contact with the Al layer.

A laminated layer including the Mo layer and the IZO layer of the reflective electrode layer 26, which are layers other than the Al layer, is formed so that top and side surfaces of an end of the laminated layer are not covered in the boundary region.

Further, the insulating layer 21 is formed along a side surface of the colored layer 20 so as to cover a part of a top surface of the Mo layer arranged higher than the IZO layer in the laminated layer, the laminated layer including the Mo layer and the IZO layer and top and side surfaces of an end of the laminated layer being not covered in the boundary region.

Further, one portion of the pixel electrode layer 22 formed in the reflective region and another portion of the pixel electrode layer 22 formed in the transmissive region are electrically connected to each other in the boundary region, the pixel electrode layer 22 being made from ITO layer. Both portions of the pixel electrode layer 22 are also electrically connected to the Mo layer and the IZO layer uncovered in the boundary region.

Fig. 6(a) is an SEM photograph of reflective electrode layer 26 and the colored layer 20 provided in the liquid crystal display panel 2 of Fig. 5. Fig. 6(b) is a partial enlarged view of the circle illustrated in Fig. 6(a).

With this configuration, the pixel electrode layer 22 made from ITO can be formed without being disconnected in the boundary region. And the reflective electrode layer 26 can be electrically connected to the pixel electrode layer 22 in the boundary region, without electrical corrosion which can be caused by an electrical connection between the ITO layer and the Al layer.

Accordingly, it is not necessary to provide an additional IZO layer on the Al layer, as with the conventional configuration illustrated in Fig. 8, so that the liquid crystal display panel 2, which includes the reflective electrode layer 26 with high reflectance, can be attained.

With reference to Fig. 7, a process for producing the liquid crystal display panel 2 according to the present embodiment will be described below.

Fig. 7 illustrates parts of a step for producing a TFT array substrate performed in a process for producing the liquid crystal display panel 2 with the structure illustrated in Fig. 5.

As illustrated in (a) of Fig. 7, on an interlayer insulator 18, the IZO layer, the Mo layer, and the Al layer are laminated in this order, and a resist film having predetermined patterns is formed on the Al layer.

With the resist film being used as a mask, the Al layer and the Mo layer are removed (patterning) by means of mixed liquid of phosphoric acid/acetic acid/nitric acid, and then with the remained resist film, Al layer and Mo layer being used as masks, the IZO layer is removed (patterning) by means of oxalic acid, and then the resist film is removed. In this way, the reflective electrode layer 26 as illustrated in (b) of Fig. 7 can be attained.

Subsequently, as illustrated in (c) of Fig. 7, a photosensitive colored layer 20 (color filter layer) is applied, exposed and developed, and a hole 20a is formed in such a manner that top and side surfaces of an end of the reflective electrode layer 26, which extends into the boundary region are not covered. And as illustrated in (d) of Fig. 7, with the colored layer 20 being used as a mask, only the Al layer of the reflective electrode layer 26 is etched by means of alkaline solution such as TMAH (Tetra Methyl Ammonium Hydroxide) and removed to an interface with the colored layer 20, the alkaline solution being used when the colored layer 20 is developed.

Subsequently, as illustrated in (e) of Fig. 7, an insulating layer 21 is formed along a side surface of the colored layer 20 so as to cover a part of the top surface of the Mo layer arranged higher than the IZO layer in the laminated layer, the laminated layer including the Mo layer and the IZO layer and top and side surfaces of an end of the laminated layer being not covered in the boundary region. That is, the insulating layer 21 is formed so that the Mo layer and the IZO layer of the reflective electrode layer 26 are not covered in the boundary region.

Subsequently, as illustrated in (f) of Fig. 7, a pixel electrode 22 made from ITO is provided by means of a sputtering process. One portion of the pixel electrode layer 22 formed in the reflective region and another portion of the pixel electrode layer 22 formed in the transmissive region are electrically connected to each other in the boundary region.

Further, in the boundary region, both of the portions of the pixel electrode layer 22 are electrically connected to the Mo layer and the IZO layer of the reflective electrode layer 26 both of which extend into the boundary region.

As described above, the insulating layer 21 is formed along the side surface of the colored layer 20 so as to cover a part of the top surface of the Mo layer arranged higher than the IZO layer, both of which are not covered in the boundary region, so that the pixel electrode layer 22 can be formed without being disconnected in the boundary region, as illustrated in (f) of Fig. 7.

### [Embodiment 3]

With reference to Figs. 9 to 12, Embodiment 3 of the present invention will be described. The present embodiment differs from Embodiment 1 in that reflective electrode layers 26, 27, and 28 respectively have laminated structures in which an Al layer is an uppermost layer, and that an insulating layer 21 is formed so as to cover a side surface of a colored layer 20 in the boundary region, but otherwise, Embodiment 3 is equivalent to Embodiment 1. For convenience, the same reference numerals are given to the members having the same functions as those of the members indicated in the figures illustrating Embodiment 1 and their descriptions are omitted.

Fig. 9 illustrates Embodiment 3 of the liquid crystal display panel 2 in accordance with the present invention.

As illustrated in Fig. 9, the insulating layer 21 is formed in the boundary region so as to cover a side surface of the colored layer 20, and the reflective electrode layer 26 has a laminated structure in which the Al layer is an uppermost layer, and, below the Al layer, a Mo layer and an IZO layer are provided, the Mo layer being in contact with the Al layer.

With the colored layer 20 and the insulating layer 21 being used as masks, the Al layer and the Mo layer of the reflective electrode layer 26 are etched by means of mixed liquid of phosphoric acid/acetic acid/nitric acid, and shifted outside the hole 20a. The production processes will be described in detail later.

Then, a pixel electrode 22 made from ITO is provided, and thus the pixel electrode 22 formed in the transmissive region is electrically connected to the IZO layer of the reflective electrode layer 26 in the boundary region.

Since, in the boundary region, the insulating layer 21 is formed so as to only cover a side surface of the colored layer 20, as illustrated in Fig. 9, one portion of the pixel electrode 22 formed in the reflective region and another portion of the pixel electrode 22 formed in the transmissive region are disconnected in the boundary region. Accordingly, in the boundary region, only the another portion of the pixel electrode 22 formed in the transmissive region is electrically connected to the IZO layer of the reflective electrode layer 26. According to the configuration, it is not necessary to provide an additional IZO layer on the Al layer, as with the case of the conventional configuration illustrated in Fig. 8, so that the liquid crystal display panel 2 including the reflective electrode layer 26 with high reflectance can be attained.

With reference to Fig. 10, a process for producing the liquid crystal display panel 2 according to the present embodiment will be described.

Fig. 10 illustrates parts of a step for producing a TFT array substrate performed in a process for producing the liquid crystal display panel 2 with the structure illustrated in Fig. 9.

As illustrated in (a) of Fig. 10, on an interlayer insulator 18, the IZO layer, the Mo layer, and the Al layer are laminated in this order, and a resist film having predetermined patterns is formed on the Al layer.

With the resist film being used as a mask, the Al layer and the Mo layer are removed (patterning) by means of mixed liquid of phosphoric acid/acetic acid/nitric acid, and with the remained resist film, the Al layer and the Mo layer being used as masks, the IZO layer is removed (patterning) by means of oxalic acid, and then the resist film is removed. In this way, the reflective electrode layer 26 as illustrated in (b) of Fig. 10 can be attained.

As illustrated in (c) of Fig. 10, a photosensitive colored layer 20 (color filter layer) is applied, exposed and developed, and a hole 20a is formed in the colored layer 20 in such a manner that top and side surfaces of an end of the reflective electrode layer 26 in the boundary region are not covered.

Subsequently, as illustrated in (d) of Fig. 10, an photosensitive transparent insulating layer 21 is formed along a side surface of the colored layer 20 so as to cover a part of the top surface of the Al layer, which is the uppermost layer of the reflective electrode layer 26 uncovered in the boundary region. Accordingly, even after the insulating layer 21 is formed, the top and side surfaces of the end of the reflective electrode layer 26 are not covered in the boundary region.

Subsequently, as illustrated in (e) of Fig. 10, with the colored layer 20 and the insulating layer 21 being used as masks, the Al layer and the Mo layer are simultaneously etched and removed to an interface with the colored layer 20, by means of mixed liquid of phosphoric acid/acetic acid/nitric acid.

Subsequently, as illustrated in (f) of Fig. 10, the pixel electrode 22 made from ITO is provided by means of a sputtering process, and the pixel electrode 22 formed in the transmissive region is electrically connected to the IZO layer of the reflective electrode layer 26, which extends into the boundary region. In this case, the Al layer of the reflective electrode layer 26 does not extend into the boundary region and is not directly connected to the pixel electrode 22 made from ITO, so that no electrical corrosion occurs between the ITO layer and the Al layer in this configuration.

Fig. 11 illustrates parts of a step for producing a TFT array substrate performed in a process for producing a modified liquid crystal display panel 2 according to the present invention.

As described above, the reflective electrode layer 26 illustrated in Fig. 10 has a laminated structure in which the IZO layer, the Mo layer and the Al layer are laminated in this order, while the reflective electrode layer 27 illustrated in Fig. 11 has a laminated structure in which the ITO layer, the Mo layer and the Al layer are laminated in this order.

In other words, the production step illustrated in (a) through (f) of Fig. 11 is equivalent to that illustrated in (a) through (f) of Fig. 10 except that a lowermost layer of the reflective electrode layers is different, and its description is omitted.

Fig. 12 illustrates parts of a step for producing a TFT array substrate performed in a process for producing a further modified liquid crystal display panel 2 according to the present invention.

In Fig. 12, a reflective electrode layer 28 differs from the reflective electrode layer 26 illustrated in Fig. 10 and the reflective electrode layer 27 illustrated in Fig. 11, in that the reflective electrode layer 28 has a laminated structure in which two layers, an IZO layer and an Al layer, are laminated in this order.

As illustrated in (a) of Fig. 12, on an interlayer insulator 18, the IZO layer and the Al layer are laminated in this order, and a resist film having predetermined patterns is formed on the Al layer.

With the resist film being used as a mask, the Al layer is removed (patterning) by means of mixed liquid of phosphoric acid/acetic acid/nitric acid, and then with the remained resist film and Al layer being used as masks, the IZO layer is removed (patterning) by means of oxalic acid, and subsequently the resist film is removed. In this way, the reflective electrode layer 28 as illustrated in (b) of Fig. 12 can be attained.

Subsequently, as illustrated in (c) of Fig. 12, a photosensitive colored layer 20 (color filter layer) is applied, exposed and developed, and a hole 20a is formed in the colored layer 20 in such a manner that top and side surfaces of an end of the reflective electrode layer 28 in the boundary region are not covered.

Subsequently, as illustrated in (d) of Fig. 12, a photosensitive transparent insulating layer 21 is formed along a side surface of the colored layer 20 so as to cover a part of the top surface of the Al layer, which is the uppermost layer of the reflective electrode layer 28 uncovered in the boundary region. Accordingly, even after the insulating layer 21 is formed, the top and side surfaces of the end of the reflective electrode layer 28 are not covered in the boundary region.

Further, with the colored layer 20 and the insulating layer 21 being used as masks, only the Al layer of the reflective electrode layer 28 is etched and removed to the interface of the colored layer 20 as illustrated in (e) of Fig. 12, by means of alkaline solution such as TMAH which is used to develop the insulating layer 21 as illustrated in (d) of Fig. 12.

In other words, the development process of the insulating layer 21 and the etching and removing process of the Al layer of the reflective electrode layer 28 are carried out in the same process by means of the alkaline solution used for developing the insulating layer 21.

Subsequently, as illustrated in Fig. 12(f), a pixel electrode 22 made from ITO is provided by means of a sputtering process, and the pixel electrode 22 formed in the transmissive region is electrically connected to the IZO layer of the reflective electrode layer 28, which extends into the boundary region. In this case, the Al layer of the reflective electrode layer 28 does not extend into the boundary region and is not directly connected to the pixel electrode 22 made from ITO, so that no electrical corrosion occurs between the ITO layer and the Al layer in this configuration.

In the liquid crystal display panel according to the present invention, it is preferable that the reflective electrode layer has a laminated structure in which an aluminum layer is an uppermost layer thereof and, below the aluminum layer, at least one conductive material layer made from a conductive material other than aluminum is provided, one of the at least one conductive material layer, which one is in contact with the aluminum layer, is a layer that is not an ITO layer, and the at least one conductive material layer of the reflective electrode layer includes one or more layers whose top and side surfaces at an end thereof are uncovered in the boundary region so as to be an exposed portion of the at least one conductive material layer, the one or more layers including at least a lowermost layer of the at least one conductive material layer, and any one of the colored layer and the insulating layer formed in the reflective region is formed along a side surface of the other of the colored layer and the insulating layer so as to cover a part of a top surface of an uppermost one of the one or more layers uncovered in the boundary region.

In the liquid crystal display panel according to the present invention, it is preferable that any one of the colored layer and the insulating layer formed in the reflective region is formed so as to cover a side surface of the other of the colored layer and the insulating layer in the boundary region.

In the liquid crystal display panel according to the present invention, it is preferable that the pixel electrode layer is an ITO layer.

In the method for producing the liquid crystal display panel according to the present invention, it is preferable that the method further comprising the step of: (e) etching the reflective electrode layer, wherein: in the step (a) of forming the reflective electrode layer, an aluminum layer is formed as an uppermost layer and, below the aluminum layer, at least one conductive material layer made from a conductive material other than aluminum is formed, so that one of the at least one conductive material layer, which one is in contact with the aluminum layer, is a layer that is not an ITO layer, in the step (e) of etching the reflective electrode layer, the etching is performed in such a manner that the at least one conductive material layer includes one or more layers whose top and side surfaces at an end thereof are uncovered in the boundary region so as to be an exposed portion of the at least one conductive material layer, the one or more layers including at least a lowermost layer of the at least one conductive material layer, in the steps (b) and (c) of forming the colored layer and the insulating layer, any one of the colored layer and the insulating layer formed in the reflective region is formed along a side surface of the other of the colored layer and the insulating layer so as to cover a part of a top surface of an uppermost one of the one or more layers uncovered in the boundary region, and in the step (d) of forming the pixel electrode layer, the pixel electrode layer is formed from ITO, and a portion of the pixel electrode layer formed in the reflective region and another portion of the pixel electrode layer formed in the transmissive region are electrically connected to each other in the boundary region, and the both portions of the pixel electrode layer are electrically connected to the exposed portion of the at least one conductive material layer.

In the method for producing the liquid crystal display panel according to the present invention, it is preferable that the method further comprising the step of: (e) etching the reflective electrode layer, wherein: in the steps (b) and (c) of forming the colored layer and the insulating layer, any one of the colored layer and the insulating layer is formed so as to cover a side surface of the other of the colored layer and the insulating layer in the boundary region, in the step (a) of forming the reflective electrode layer, an aluminum layer is formed as an uppermost layer and, below the aluminum layer, at least one conductive material layer made from a conductive material other than aluminum is formed, so that one of the at least one conductive material layer, which one is in contact with the aluminum layer, is a layer that is not an ITO layer, in the step (e) of etching the reflective electrode layer, with the colored layer and the insulating layer being used as masks, the etching is performed in such a manner that top and side surfaces of an end of at least a lowermost layer of the at least one conductive material layer are uncovered in the boundary region so as to be an exposed portion of the at least one conductive material layer, and in the step (d) of forming the pixel electrode layer, the pixel electrode layer is formed from ITO, and the pixel electrode layer formed in the transmissive region is electrically connected to the exposed portion of the at least one conductive material layer.

According to the configuration, at least one conductive material layer made from a conductive material other than aluminum, in the reflective electrode layer, is formed so that the at least one conductive material layer includes one or more layers whose top and side surfaces at an end thereof are uncovered in the boundary region, the one or more layers including at least a lowermost layer of the at least one conductive material layer.

Accordingly, because the at least one conductive material layer of the reflective electrode layer, which are made from a conductive material other than aluminum, is uncovered in the boundary region, no electrical corrosion would occur, even if the pixel electrode layer is made from ITO and electrically connected to the reflective electrode layer in the boundary region.

According to the configuration, it is not necessary to provide an additional IZO layer on the aluminum layer of the reflective electrode layer, which would cause the reduction of the transmittance. And it is thus possible to attain a liquid crystal display panel and a method for producing the liquid crystal display panel, with the use of any material of the pixel electrode layer, without taking into consideration electrical corrosion with the aluminum layer.

In the liquid crystal display panel according to the present invention, it is preferable that the pixel electrode layer and the reflective electrode layer are electrically connected to each other in the boundary region.

According to the configuration, a liquid crystal display panel can be attained, which has improved color reproducibility and reflection characteristic in the reflective region, compared to the conventional configuration in which the pixel electrode layer and the reflective electrode layer are electrically connected to each other on the region where the reflective electrode layer is formed.

In the liquid crystal display panel according to the present invention, it is preferable that the first insulating substrate includes a storage capacitor element, and the boundary region is formed above a storage capacitor wiring for forming the storage capacitor element.

According to the configuration, the boundary region, where an opening in the colored layer and an inclination of the insulating layer are located, is formed above the storage capacitor wiring for forming the storage capacitor element.

The storage capacitor wiring is generally made from a high conductive metal material, so that light cannot be transmitted through the storage capacitor wiring.

It is possible to attain a liquid crystal display panel having an improved aperture ratio since the boundary region including a region where light passing through the region is not colored and an ineffective display region is formed above the storage capacitor wiring through which no light is transmitted, so as to overlap with the storage capacitor wiring which does not contribute to the aperture ratio.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The present invention is applicable to a liquid crystal display panel and a liquid crystal display device comprising the liquid crystal display panel.

### Reference Signs List

- 1: Liquid crystal display device
- 2: Liquid crystal display panel
- 3: Backlight
- 4: TFT array substrate (First insulating substrate)
- 5: Counter substrate (Second insulating substrate)
- 6: Liquid crystal layer
- 19, 26, 27, 28: Reflective electrode layer
- 20: Colored layer
- 21: Insulating layer
- 22: Pixel electrode

## Claims

1. lectrode A liquid crystal display panel comprising:
a first insulating substrate having (i) a reflective region including a reflective electrode layer for reflecting light, a colored layer for coloring light, an insulating layer and a pixel electrode layer, and (ii) a transmissive region including the colored layer and the pixel electrode layer;
a second insulating substrate provided opposite to a surface of the first insulating substrate, on which surface the pixel electrode layer is formed; and
a liquid crystal layer enclosed between the first insulating substrate and the second insulating substrate, wherein:
the insulating layer is provided to vary the thickness of the liquid crystal layer in the reflective region from that in the transmissive region, and
in the reflective region, any one of the colored layer and the insulating layer covers the reflective electrode layer, the other of the colored layer and the insulating layer covers the any one of the colored layer and the insulating layer, and the pixel electrode layer covers the other of the colored layer and the insulating layer,
in the transmissive region, the colored layer and the pixel electrode layer are provided in such a way that the pixel electrode layer covers the colored layer, and
in a boundary region between the reflective region and the transmissive region, top and side surfaces of an end of the reflective electrode layer which extends into the boundary region are not covered with the colored layer and the insulating layer in the reflective region and with the colored layer in the transmissive region.

2. n the transmissive region. The liquid crystal display panel as set forth in Claim 1, wherein:
the reflective electrode layer has a laminated structure in which an aluminum layer is an uppermost layer thereof and, below the aluminum layer, at least one conductive material layer made from a conductive material other than aluminum is provided, one of the at least one conductive material layer, which one is in contact with the aluminum layer, is a layer that is not an ITO layer, and
the at least one conductive material layer of the reflective electrode layer includes one or more layers whose top and side surfaces at an end thereof are uncovered in the boundary region so as to be an exposed portion of the at least one conductive material layer, the one or more layers including at least a lowermost layer of the at least one conductive material layer, and
any one of the colored layer and the insulating layer formed in the reflective region is formed along a side surface of the other of the colored layer and the insulating layer so as to cover a part of a top surface of an uppermost one of the one or more layers uncovered in the boundary region.

3. more layers uncovered in the boundary region. The liquid crystal display panel as set forth in Claim 1, wherein:
any one of the colored layer and the insulating layer formed in the reflective region is formed so as to cover a side surface of the other of the colored layer and the insulating layer in the boundary region.

4. n the boundary region. The liquid crystal display panel as set forth any one of Claims 1 to 3, wherein:
the pixel electrode layer and the reflective electrode layer are electrically connected to each other in the boundary region.

5. The liquid crystal display panel as set forth in Claim 4, wherein:
the pixel electrode layer is an ITO layer.

6. el electrode layer is an ITO layer. The liquid crystal display panel as set forth any one of Claims 1 to 5, wherein:
the first insulating substrate includes a storage capacitor element, and
the boundary region is formed above a storage capacitor wiring for forming the storage capacitor element.

7. for forming the storage capacitor element. A liquid crystal display device comprising a liquid crystal display panel as set forth any one of Claims 1 to 6 and a backlight for irradiating the liquid crystal display panel with light.

8. ith light. A method for producing a liquid crystal display panel,
the liquid crystal display panel including:
a first insulating substrate having (i) a reflective region including a reflective electrode layer for reflecting light, a colored layer for coloring light, an insulating layer and a pixel electrode layer, and (ii) a transmissive region including the colored layer and the pixel electrode layer;
a second insulating substrate provided opposite to a surface of the first insulating substrate, on which surface the pixel electrode layer is formed; and
a liquid crystal layer enclosed between the first insulating substrate and the second insulating substrate,
the method comprising the steps of:
(a) forming the reflective electrode layer in the reflective region;
(b) forming the colored layer in the reflective region and the transmissive region;
(c) forming the insulating layer in the reflective region to vary the thickness of the liquid crystal layer in the reflective region from that in the transmissive region; and
(d) forming the pixel electrode layer in the reflective region and the transmissive region,
the step (b) of forming the colored layer, the step (c) of forming the insulating layer, and the step (d) of forming the pixel electrode layer being performed so that,
in the reflective region, any one of the colored layer and the insulating layer covers the reflective electrode layer, the other of the colored layer and the insulating layer covers the any one of the colored layer and the insulating layer, and the pixel electrode covers the other of the colored layer and the insulating layer, and
in the transmissive region, the colored layer and the pixel electrode layer are provided in such a way that the pixel electrode layer covers the colored layer, and
in a boundary region between the reflective region and the transmissive region, top and side surfaces of an end of the reflective electrode layer which extends into the boundary region are uncovered with the colored layer and the insulating layer in the reflective region and with the colored layer in the transmissive region.

9. n the transmissive region. The method as set forth in Claim 8, further comprising the step of:
(e) etching the reflective electrode layer, wherein:
in the step (a) of forming the reflective electrode layer, an aluminum layer is formed as an uppermost layer and, below the aluminum layer, at least one conductive material layer made from a conductive material other than aluminum is formed, so that one of the at least one conductive material layer, which one is in contact with the aluminum layer, is a layer that is not an ITO layer,
in the step (e) of etching the reflective electrode layer, the etching is performed in such a manner that the at least one conductive material layer includes one or more layers whose top and side surfaces at an end thereof are uncovered in the boundary region so as to be an exposed portion of the at least one conductive material layer, the one or more layers including at least a lowermost layer of the at least one conductive material layer,
in the steps (b) and (c) of forming the colored layer and the insulating layer, any one of the colored layer and the insulating layer formed in the reflective region is formed along a side surface of the other of the colored layer and the insulating layer so as to cover a part of a top surface of an uppermost one of the one or more layers uncovered in the boundary region, and
in the step (d) of forming the pixel electrode layer, the pixel electrode layer is formed from ITO, and a portion of the pixel electrode layer formed in the reflective region and another portion of the pixel electrode layer formed in the transmissive region are electrically connected to each other in the boundary region, and the both portions of the pixel electrode layer are electrically connected to the exposed portion of the at least one conductive material layer.

10. of the at least one conductive material layer. The method as set forth in Claim 8, further comprising the step of:
(e) etching the reflective electrode layer, wherein:
in the steps (b) and (c) of forming the colored layer and the insulating layer, any one of the colored layer and the insulating layer is formed so as to cover a side surface of the other of the colored layer and the insulating layer in the boundary region,
in the step (a) of forming the reflective electrode layer, an aluminum layer is formed as an uppermost layer and, below the aluminum layer, at least one conductive material layer made from a conductive material other than aluminum is formed, so that one of the at least one conductive material layer, which one is in contact with the aluminum layer, is a layer that is not an ITO layer,
in the step (e) of etching the reflective electrode layer, with the colored layer and the insulating layer being used as masks, the etching is performed in such a manner that top and side surfaces of an end of at least a lowermost layer of the at least one conductive material layer are uncovered in the boundary region so as to be an exposed portion of the at least one conductive material layer, and
in the step (d) of forming the pixel electrode layer, the pixel electrode layer is formed from ITO, and the pixel electrode layer formed in the transmissive region is electrically connected to the exposed portion of the at least one conductive material layer.
